# EUROPEAN PATENT APPLICATION

(11) **EP 3 269 940 A1**
(43) Date of publication of application: **17.01.2018**
(21) Application number: 17180351.3
(22) Date of filing: 07.07.2017
(51) Int. Cl.: F01D 11/18, F01D 25/00, F01D 25/24, F04D 29/52

(54) **COMPRESSOR AND CORRESPONDING GAS TURBINE ENGINE WITH SUCH A COMPRESSOR**

(30) Priority: 11.07.2016 US 201615206464
(71) Applicant: General Electric Company, Schenectady, NY 12345 (US)
(72) Inventor: CASAVANT, Matthew Stephen, Greenville, SC South Carolina 29615 (US); BLACK, Kenneth Damon, Greenville, SC South Carolina 29615 (US); HANSEN, Christian Michael, Greenville, SC South Carolina 29615 (US); FLOYD, Donald Earl, Greenville, SC South Carolina 29615 (US); ADAICKALASAMY, James, 560066 Bangalore (IN); KLINGLER, Brett Darrick, Greenville, SC South Carolina 29615 (US); CAO, Khoa Dang, Greenville, SC South Carolina 29615 (US); BENSON, Kyle Eric, Greenville, SC South Carolina 29615 (US); PERKINS, Devin Patrick, Greenville, SC South Carolina 29615 (US); MCCLELLAND, Damian Anthony, Greenville, SC South Carolina 29615 (US)
(74) Representative: Lee, Brenda

(57) **Abstract**

A gas turbine engine (10) is disclosed having a turbine (16), one or more hydrocarbon gas combustors (34), and a compressor (12). The compressor (12) has a rotor assembly with one or more rotor blade rows (18) extending radially outward from an inner wheel disk (54). The compressor (12) also has a stator assembly with one or more stator vane rows (24) extending radially inward from an inner casing (46) and positioned between adjacent rotor blade rows (18). The inner casing (46) extends circumferentially around the rotor assembly and is constructed from at least one low-alpha metal alloy.

## Description

### FIELD OF THE DISCLOSURE

This disclosure relates generally to tip clearance control for turbomachines and more particularly to a device for controlling tip clearances of axial compressor rotor blades using low-alpha stator component structures.

### BACKGROUND OF THE DISCLOSURE

A gas turbine typically includes an axial flow compressor, one or more combustors that are disposed downstream from the compressor, a turbine that is disposed downstream from the one or more combustors and a shaft that extends axially through the gas turbine. The compressor includes an outer casing and an inner casing that circumferentially surrounds at least a portion of the shaft. The compressor further includes alternating rows of compressor rotor blades and stator vanes that are disposed within the outer/inner casing. The compressor rotor blades are coupled to the shaft and extend radially outward towards the outer/inner casing. The stator vanes are arranged annularly around the shaft and extend radially inward from the outer/inner casing towards the shaft. A stage within the compressor generally comprises of one row of the compressor rotor blades and an axially adjacent row of the stator vanes.

During startup of the gas turbine engine, the operating temperature of both the rotor and stator assemblies increases up to a maximum anticipated level as the compressor and gas turbine engine reach a normal running speed and steady state condition. Over time, the increased operating temperature of the blades may cause the tips to weaken, fracture or even deteriorate at the distal ends, causing an inevitable increase in the annular space between the blade tips and casing (sometimes referred to as "sealing gap" or "clearance"). Any such increase in space between the blade tips and casing during normal operation translates into a reduction of both rotor and stator efficiency, which in turn decreases the overall compressor and engine efficiency.

In order to improve or at least maintain the continued efficiency of the compressor and gas turbine, the sealing gap, or clearance, between the rotor blade tips and casing of the compressor should remain as small as possible without adversely restricting gas flow or effecting free blade rotation during normal operating conditions. The efficiency of a compressor is adversely affected if it is operated with large clearances between the tips of the rotating blades and the attendant stationary components (i.e. shrouds). The requirement for tip clearances results from the fact that the rotating components, such as the blades and the wheel, increase in diameter considerably due to centrifugal stresses and thermal expansion while the stationary components, the shroud and casing, are subject to changes in dimension to a lesser degree.

During continuous operation of a compressor, the occurrence of a variety of operating conditions is encountered. These varying conditions may cause considerable variations in compressor tip clearance. For a particular set of operating conditions any desired running clearance between the rotating and stationary components can be obtained if the components are fabricated and assembled with an appropriate initial tip clearance, sometimes referred to a build clearance. However, the heavier rotating components of a compressor having a large mass are necessarily slow to respond to changes in operating conditions, thus requiring large initial tip clearances. The normal practice is to design the machine such that the desired clearance exists during maximum speed, steady-state (SS) operating conditions. As a consequence, however, during other periods of operation such as during transient operation, the clearance is less than the predetermined desired clearance.

Previous known means for reducing tip clearances, have involved shrouded blades, or abradable shrouds (casings) and coatings which are worn away by the blades as the rotating parts expand. These devices have not afforded a completely satisfactory solution to the problem of large tip clearances. The shrouded blades lead to a design which is inherently heavier and more difficult to manufacture than the unshrouded blade.

Another previous clearance control means used rotor and casing materials with large dimensional variability, caused by a relatively high coefficient of thermal expansion (CTE or α), resulting in rubbing and/or excessive tip clearance, both of which are detrimental to compressor performance and efficiency. This makes it difficult to manage clearances between the rotor tips and the inner casing without use of an active clearance control system. Many active clearance control systems, in order to help match the dimensions of the casing and the rotor, require use of cooling air, control valves, and actuators which adds complexity and reliability concerns.

### BRIEF DESCRIPTION OF THE DISCLOSURE

Aspects and advantages of the disclosure will be set forth in part in the following description, or may be obvious from the description, or may be learned through practice of the disclosure.

A gas turbine engine is disclosed having a turbine, one or more hydrocarbon gas combustors and a compressor. The compressor has a rotor assembly with one or more rotor blade rows having circumferentially spaced-apart rotor blades, each blade extending radially outward from an inner wheel disk. The compressor also has a stator assembly with one or more stator vane rows having circumferentially spaced-apart stator vanes extending radially inward from an inner casing. Each stator vane row is positioned between adjacent rotor blade rows. The inner casing extends circumferentially around the rotor assembly to form a plurality of inner flow paths defined by the rotor blades cooperating with the stator vanes. The rotor blades exhibit a hot running rotor tip clearance and a cold build rotor tip clearance. The inner casing is constructed from at least one low-alpha metal alloy.

These and other features, aspects and advantages of the present disclosure will become better understood with reference to the following description and appended claims. The accompanying drawings, which are incorporated in and constitute a part of this specification, illustrate embodiments of the disclosure and, together with the description, serve to explain the principles of the disclosure.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 is an example of a gas turbine as may incorporate various embodiments of the present disclosure;
FIG. 2 is a cross-sectional illustration of a portion of a compressor on a rotating machine (such as a gas turbine);
FIG. 3 is a further cross sectional view of a select number of the rotor blades and stator vanes as depicted in FIG. 2;
FIG. 4 is a graph comparing the percent radial opening for a baseline high-alpha stator casing and a low-alpha stator casing in an operating compressor over time.

Repeat use of reference characters in the present specification and drawings is intended to represent the same or analogous features or elements of the present disclosure.

### DETAILED DESCRIPTION OF THE DISCLOSURE

Reference now will be made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

Although exemplary embodiments of the present disclosure will be described generally in the context of an axial flow compressor used in an industrial gas turbine for purposes of illustration, one of ordinary skill in the art will readily appreciate that embodiments of the present disclosure may be applied to any device having a row of rotating blades that is positioned adjacent to a row of stationary or stator vanes and is not limited to an axial-flow compressor unless specifically recited in the claims. For example, the present disclosure may be incorporated into a compressor of a jet engine, a high speed ship engine, a small scale power station, or the like. In addition, the present disclosure may be incorporated into a compressor used in varied applications, such as large volume air separation plants, blast furnace applications, propane dehydrogenation, or the like.

As used herein, the term "radially" refers to the relative direction that is substantially perpendicular to an axial centerline of a particular component, and the term "axially" refers to the relative direction that is substantially parallel to an axial centerline of a particular component. Also as used herein, the term "low-alpha" refers a material exhibiting a property at or below a threshold value for the coefficient of linear thermal expansion (CTE). CTE is mathematically represented with the Greek letter alpha (α). CTE is defined herein as a material property indicative of the extent to which a material expands upon heating and is expressed as the fractional increase in length per unit rise in temperature. The term "low-alpha" refers to exhibiting a property where the coefficient of linear thermal expansion (CTE) is in the range of about 12 microns/meter/degrees Kelvin (µm/m-K) or less. The term "high-alpha" material is defined herein as a material exhibiting a property above about 12 microns/meter/degrees Kelvin (µm/m-K) coefficient of linear thermal expansion (CTE). The CTE property is essentially constant over the entire temperature range of about 20°C to about 650 °C, sometimes referred to as 'mean' or 'average' CTE.

Adequate clearance control during operation of a turbine can be accomplished by casings composed of a low-alpha metal alloy (having a low CTE), which in turn provide for larger cold build clearances. Many low-alpha metal alloys are inadequate since they are not strong enough at high operating temperatures to ensure safe operation. The need for higher strength at higher temperatures called for the use of nickel-based alloys and specialty steels, whose thermal conductivity is characteristically higher than that of previously used high-alpha metals. Some nickel-base alloys and specialty steels can provide adequate tip clearance control during maximum operating conditions and at part-power conditions, and can reduce the cold build clearances between the rotating and non-rotating structures.

Low-alpha metal alloys according to this disclosure can be implemented on a wide variety of rotating assemblies, particularly compressors that include a rotor rotating about a central longitudinal axis and a plurality of blades mounted to a wheel disk that extend radially outward. Most rotor assemblies also include an outer casing having a generally cylindrical shape and an inner casing spaced radially outwardly from the rotor and blades to define a narrow annular gap between the inner circumferential surface of the inner casing and end tips of the rotor blades.

Low-alpha metal alloys are used to construct the inner casing of the turbine and define a minimum annular gap (clearance) during thermal expansion of the rotor and the casing. The annular gap is referred to as tip clearance and is defined by the distance between the inner casing inner circumference and tips of the rotary blades. During periods of differential growth of the rotor (for example, due to the heat conducted up through the blades and rotor assembly as the engine and compressor reach nominal operating conditions), the casing will expand due to heat transfer from the compressed air and surrounding engine parts as the engine and compressor reach their normal operating speed.

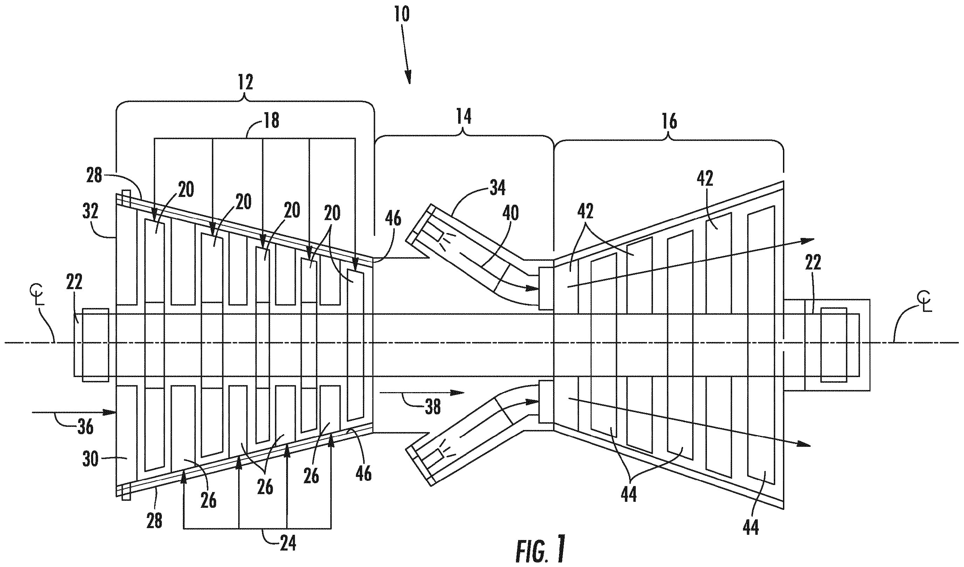

Referring now to the drawings, wherein like numerals refer to like components, FIG. 1 illustrates an example of a gas turbine 10 as may incorporate various embodiments of the present disclosure. As shown, the gas turbine 10 generally includes an axial flow compressor 12, a combustion section 14 disposed downstream from the compressor 12 and a turbine 16 disposed downstream from the combustion section 14. The compressor 12 generally includes multiple rows 18 of rotor blades 20 arranged circumferentially around a shaft 22 that extends at least partially through the gas turbine 10. The compressor 12 further includes multiple rows 24 of stator vanes 26 arranged circumferentially around the shaft 22. The stator vanes may be fixed to at least one of an outer casing 28 and an inner casing 46 that extends circumferentially around the rows 18 of the rotor blades 20. The compressor 12 may also include one or more rows of adjustable inlet guide vanes 30 disposed substantially adjacent to an inlet 32 to the compressor 12. The combustion section 14 includes at least one combustor 34. The shaft 22 may extend axially between the compressor 12 and the turbine 16.

In normal operation, air 36 is drawn into the inlet 32 of the compressor 12 and is progressively compressed to provide a compressed air 38 to the combustion section 14. The compressed air 38 is mixed with fuel in the combustor 34 to form a combustible mixture. The combustible mixture is burned in the combustor 34, thereby generating a hot gas 40 that flows from the combustor 34 across a row of turbine nozzles 42 and into the turbine section 16. The hot gas 38 rapidly expands as it flows across alternating stages of turbine blades 44 connected to the shaft 22 and the turbine nozzles 42. Thermal and/or kinetic energy is transferred from the hot gas 40 to each stage of the turbine blades 44, thereby causing the shaft 22 to rotate and produce mechanical work. The shaft 22 may be coupled to a load such as a generator (not shown) so as to produce electricity. In addition or in the alternative, the shaft 22 may drive the compressor section 12 of the gas turbine.

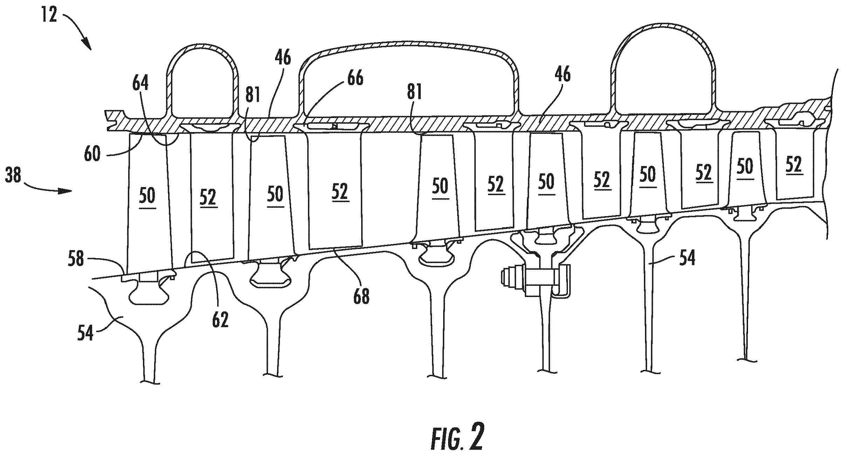

FIG. 2 is a cross sectional view of the major components of an exemplary gas turbine compressor section, including rotor and stator assemblies, illustrating the relative location of the low-alpha inner casing 46 and shown as cross-hatched structure as part of the stator assembly. Compressor section 12 includes a rotor assembly positioned within inner casing 46 to define a compressed air 38 flow path. The rotor assembly also defines an inner flow path boundary 62 of flow path 38, while the stator assembly defines an outer flow path boundary 64 of compressed air 38 flow path. The compressor section 12 includes a plurality of stages, with each stage including a row of circumferentially-spaced rotor blades 50 and a row of stator vane assemblies 52. In this embodiment, rotor blades 50 are coupled to a rotor disk 54 with each rotor blade extending radially outwardly from rotor disk 54. Each blade includes an airfoil that extends radially from an inner blade platform 58 to rotor blade tip 60. Similarly, the stator assembly includes a plurality of rows of stator vane assemblies 52 with each row of vane assemblies positioned between adjacent rows of rotor blades. The compressor stages are configured to cooperate with a compressed air 38 working fluid, such as ambient air, with the working fluid being compressed in succeeding stages. Each row of stator vane assemblies 52 includes a plurality of circumferentially-spaced stator vanes that each extend radially inward from stator inner casing 46 and includes an airfoil that extends from an outer vane platform 66 to a vane tip 68. Each airfoil includes a leading edge and a trailing edge as shown. The general location of the rotor blades 50 and stator vane assemblies 52 relative to the rim surfaces of the rotor disks 54 and inner casing 46 are shown, all of which directly benefit from the low-alpha stator construction described herein resulting in a narrow gas flow path (clearance) created between the inner casing 46 and rotor blade tips 60 during thermal expansion and contraction.

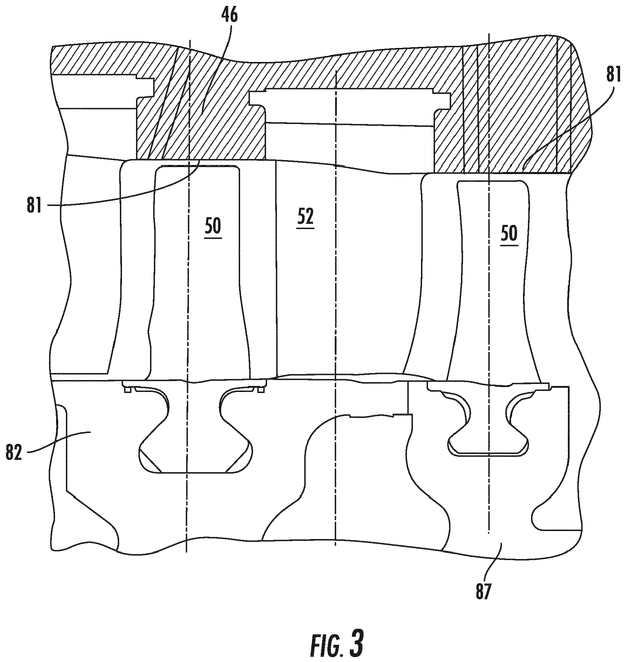

FIG. 3 illustrates how the low-alpha metal alloys according to this disclosure can be used to construct the compressor inner casing 46. A plurality of rotor blades 50 and stator vanes 52 are shown in cross section constructed from high-alpha turbine build materials. During operation, heated compressed air and centrifugal forces cause each of the two rotor blades 50 to expand. Each blade is connected to corresponding wheel disks 82 and 87. When the rotor blades 50 expand, the rotor tip clearance 81 changes in response to temperature variance and different material CTE/thermal conductivities for the rotor blades 50 and the inner casing 46. The rotor tip clearance 81 can be minimized using low-alpha metal alloys in the inner casing 46 and/or high-alpha metal alloys for the rotor assembly and remainder of the turbine. Additionally, the inner casing 46 can be constructed from a low-alpha metal alloy having an alpha that is less than the alpha of the rotor blades. This difference in CTE between rotor component and stator component, allows for relatively less casing growth than rotor growth at steady state. This in turn allows for a larger cold build clearance and a reduced transient pinch, greatly improving clearances proportional to metal temperature.

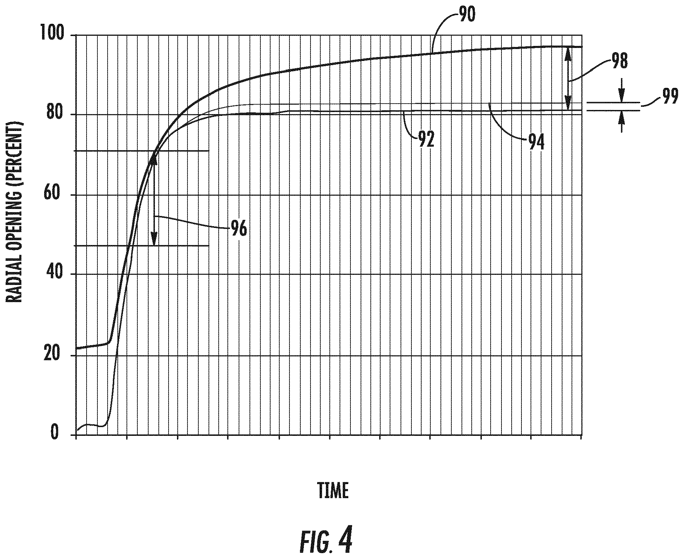

FIG. 4 is a graph showing an operating compressor percent radial opening between the compressor rotor blades and the compressor inner casing versus time. Line 90 shows the baseline stator inner casing expansion and line 92 shows the rotor blade expansion using high-alpha metal alloys for both the rotor blades and stator inner casing of a turbine. Line 94 shows expansion of the stator inner casing when constructed from low-alpha metal alloys disclosed herein. As seen in the graph, the baseline hot running clearance 98 is about 18% of the radial opening at steady-state operating conditions. However, when constructing the stator inner casing from low-alpha metal alloys disclosed herein, the low-alpha stator hot running clearance 99 is decreased to less than about 4% of the radial opening thereby improving the compressor and gas turbine efficiency. It was discovered that by changing only the stator inner casing 46 build material to at least one low-alpha metal alloy selected from the group consisting of aluminum, iron, nickel, titanium, cobalt, niobium, iron, carbon, chromium or mixtures thereof, and not changing any other turbine build materials, the baseline hot running clearance 98 (steady-state clearance) can be reduced significantly. Examples of the low-alpha metal alloys used to construct the stator inner casing include 400-series stainless steel and Incoloy 909. These low-alpha metal alloys are non-abradable and thus do not provide erodible or abradable surfaces on the inner casing. In Fig. 4, line 90 represents the baseline construction compressor inner casing which effectively drops to closely approach the compressor rotor blade expansion 92 thereby reducing the low-alpha stator hot running clearance 99 to less than about 4% of the radial opening. Rotor component materials were not altered from baseline high-alpha metal alloys to obtain the low-alpha stator hot running clearance 94. The low-alpha metal alloy inner casing also enables a larger cold build clearance 96, more than about 20% radial opening, which reduces transient pinch for the turbine.

This written description uses examples to disclose the invention, and also to enable any person skilled in the art to practice the invention, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A compressor for a gas turbine, comprising:
   a rotor assembly comprising one or more rotor blade rows comprising circumferentially spaced-apart rotor blades, each rotor blade extending radially outward from an inner wheel disk;
   a stator assembly comprising one or more stator vane rows comprising circumferentially spaced-apart stator vanes extending radially inward from an inner casing, each stator vane row positioned between adjacent rotor blade rows, the inner casing extending circumferentially around the rotor assembly thereby forming a plurality of inner flow paths defined by the rotor blades cooperating with the stator vanes, the rotor blades exhibiting a hot running rotor tip clearance and a cold build rotor tip clearance; and
   wherein said inner casing comprises at least one low-alpha metal alloy.
2. The compressor according to clause 1, wherein the at least one low-alpha metal alloy exhibits a coefficient of thermal expansion in the range of about 12 microns/meter/degrees Kelvin or less.
3. The compressor according to any preceding clause, wherein the inner casing comprises a low-alpha metal alloy having an alpha less than the alpha of the rotor blades.
4. The compressor according to any preceding clause, wherein the at least one low-alpha metal alloy is selected from the group consisting of aluminum, iron, nickel, titanium, cobalt, niobium, iron, carbon, chromium or mixtures thereof.
5. The compressor according to any preceding clause, wherein the rotor assembly comprises at least one high-alpha metal alloy.
6. The compressor according to any preceding clause, wherein the compressor is an axial flow compressor.
7. The compressor according to any preceding clause, wherein the low-alpha stator hot running rotor tip clearance is less than about 4% of the radial opening.
8. The compressor according to any preceding clause, wherein the low-alpha stator cold build rotor tip clearance is more than about 20% of the radial opening.
9. The compressor according to any preceding clause, further comprising inlet guide vanes.
10. A gas turbine engine, comprising:
   a turbine;
   one or more hydrocarbon gas combustors;
   a compressor comprising;
      a rotor assembly comprising one or more rotor blade rows comprising circumferentially spaced-apart rotor blades, each blade extending radially outward from an inner wheel disk;
      a stator assembly comprising one or more stator vane rows comprising circumferentially spaced-apart stator vanes extending radially inward from an inner casing, each stator vane row positioned between adjacent rotor blade rows, the inner casing extending circumferentially around the rotor assembly thereby forming a plurality of inner flow paths defined by the rotor blades cooperating with the stator vanes, the rotor blades exhibiting a hot running rotor tip clearance and a cold build rotor tip clearance; and
      wherein said inner casing comprises at least one low-alpha metal alloy.
11. The engine according to any preceding clause, wherein the at least one low-alpha metal alloy exhibits a coefficient of thermal expansion in the range of about 12 microns/meter/degrees Kelvin or less.
12. The engine according to any preceding clause, wherein the inner casing comprises a low-alpha metal alloy having an alpha is less than the alpha of the rotor blades.
13. The engine according to any preceding clause, wherein the at least one low-alpha metal alloy is selected from the group consisting of aluminum, iron, nickel, titanium, cobalt, niobium, iron, carbon, chromium or mixtures thereof.
14. The engine according to any preceding clause, wherein the rotor assembly comprises at least one high-alpha metal alloy.
15. The engine according to any preceding clause, wherein the compressor is an axial flow compressor.
16. The engine according to any preceding clause, wherein the low-alpha stator hot running rotor tip clearance is less than about 4% of the radial opening.
17. The engine according to any preceding clause, wherein the low-alpha stator cold build rotor tip clearance is more than about 20% of the radial opening.
18. The engine according to any preceding clause, further comprising inlet guide vanes.

## Claims

1. A compressor (12) for a gas turbine, comprising:
a rotor assembly comprising one or more rotor blade rows (18) comprising circumferentially spaced-apart rotor blades (20), each blade extending radially outward from an inner wheel disk (54);
a stator assembly comprising one or more stator vane rows (24) comprising circumferentially spaced-apart stator vanes (26) extending radially inward from an inner casing (46), each stator vane row (24) positioned between adjacent rotor blade rows (18), the inner casing (46) extending circumferentially around the rotor assembly thereby forming a plurality of inner flow paths (38) defined by the rotor blades (20) cooperating with the stator vanes (26), the rotor blades (20) exhibiting a hot running rotor tip clearance (99) and a cold build rotor tip clearance; and
wherein said inner casing (46) comprises at least one low-alpha metal alloy.

2. The compressor (12) according to claim 1, wherein the at least one low-alpha metal alloy exhibits a coefficient of thermal expansion in the range of about 12 microns/meter/degrees Kelvin or less.

3. The compressor (12) according to claim 1 or 2, wherein the inner casing (46) comprises a low-alpha metal alloy having an alpha less than the alpha of the rotor blades.

4. The compressor (12) according to claim 1, 2 or 3, wherein the at least one low-alpha metal alloy is selected from the group consisting of aluminum, iron, nickel, titanium, cobalt, niobium, iron, carbon, chromium or mixtures thereof.

5. The compressor (12) according to any of claims 1 to 4, wherein the rotor assembly comprises at least one high-alpha metal alloy.

6. A gas turbine engine (10), comprising:
a turbine (16);
one or more hydrocarbon gas combustors (34);
a compressor (12) comprising;
a rotor assembly comprising one or more rotor blade rows (18) comprising circumferentially spaced-apart rotor blades (20), each blade extending radially outward from an inner wheel disk (54);
a stator assembly comprising one or more stator vane rows (24) comprising circumferentially spaced-apart stator vanes (26) extending radially inward from an inner casing (46), each stator vane row (24) positioned between adjacent rotor blade rows (18), the inner casing (46) extending circumferentially around the rotor assembly thereby forming a plurality of inner flow paths (38) defined by the rotor blades (20) cooperating with the stator vanes (26), the rotor blades (20) exhibiting a hot running rotor tip clearance (99) and a cold build rotor tip clearance; and
wherein said inner casing (46) comprises at least one low-alpha metal alloy.

7. The engine (10) according to claim 6 wherein the at least one low-alpha metal alloy exhibits a coefficient of thermal expansion in the range of about 12 microns/meter/degrees Kelvin or less.

8. The engine (10) according to claim 6 or 7, wherein the inner casing (46) comprises a low-alpha metal alloy having an alpha less than the alpha of the rotor blades.

9. The engine (10) according to any of claims 6 to 8, wherein the at least one low-alpha metal alloy is selected from the group consisting of aluminum, iron, nickel, titanium, cobalt, niobium, iron, carbon, chromium or mixtures thereof.

10. The engine according to any of claims 6 to 9, wherein the rotor assembly comprises at least one high-alpha metal alloy.
